# EUROPEAN PATENT APPLICATION

(11) **EP 1 426 893 A1**
(43) Date of publication of application: **09.06.2004**
(21) Application number: 03027466.6
(22) Date of filing: 01.12.2003
(51) Int. Cl.: G06F 17/60

(54) **System and method for managing direct mail campaigns**

(30) Priority: 02.12.2002 US 430192 P; 28.05.2003 US 446593
(71) Applicant: Xerox Corporation, Rochester, New York 14644 (US)
(72) Inventor: Kanzinger, Charles G., Russell, OH 44022 (US); Zhang, Qing, Broadview Heights Ohio 44147 (US); Insolia, Chet C., Cleveland, OH 44128 (US); Skalinder, Brian T., Akron, OH 44313-6344 (US); Rane, Geetanjali, Twinsburg Ohio 44087 (US); Chang, Chen-hu, Twinsburg Ohio 44087 (US); Marshall, Shampra, Cleveland, OH 44105 (US)
(74) Representative: Grünecker, Kinkeldey, Stockmair & Schwanhäusser Anwaltssozietät

(57) **Abstract**

A method for managing a direct mail job for an organization includes defining a direct mail job within a web-based application; defining a plurality of tasks associated with the direct mail job; scheduling the tasks including defining a start time and a completion time; executing the assigned tasks; and tracking status of the tasks until all tasks have been completed. The method provides automated methods to efficiently and effectively identify, schedule, execute and track all the tasks involved in a direct mail campaign. The method of the invention can be used to create a traditional direct mail campaign (where printed collaterals are snail mailed to prospective clients on a list) or in a push distribution system, where items of content are sent to prospective clients on a list electronically (typically via email).

## Description

### FIELD OF THE INVENTION

This invention relates generally to direct mail campaigns and more particularly, to a system and method for automating a direct mail campaign.

### BACKGROUND OF THE INVENTION

A direct mail advertising campaign typically involves the rental of one or more direct mailing lists from a list broker, creating a package of direct mail materials, distributing the direct mail materials, receiving responses (if any) and evaluating the results. More complex direct mail campaigns direct different materials to different focus groups, which requires modifying the direct mail package. The direct mail tasks are typically distributed across many people in different departments. The person managing a direct mail campaign must manually sort through a list of tasks and projects required to move a campaign from conception to implementation. Since these tasks are manually implemented, necessary tasks may be missed or stalled during the campaign allowing competitors to get positioned in the marketplace. The manual entry also wastes time for the marketing team and other affected personnel and does not allow time for selection of the best and lowest cost vendors. A system and method for automating a direct mail campaign is needed.

### SUMMARY OF THE INVENTION

A method for managing a direct mail job for an organization, according to the invention, includes defining a direct mail job within a web-based application; defining a plurality of tasks associated with the direct mail job; scheduling the tasks including defining a start time and a completion time; executing the assigned tasks; and tracking status of the tasks until all tasks have been completed. The method of the invention provides automated methods to efficiently and effectively identify, schedule, execute and track all the tasks involved in a direct mail campaign. The method of the invention can be used to create a traditional direct mail campaign (where printed collaterals are snail mailed to prospective clients on a list) or in a push distribution system, where items of content are sent to prospective clients on a list electronically (typically via email).

The method may also include assigning tasks to identified parties within the organization for execution of the tasks and creating collaterals to be distributed to the direct mail recipients. Creating collaterals typically includes obtaining quotes from vendors; selecting a vendor and assigning a purchase order to the selected vendor. The method further provides for tracking vendor pricing information.

The method may be implemented as a web based application, and incorporated into a commercial software product such as the InteliJob framework (provided by the Bradley Company). The method may provide a user interface in which users may list all direct mail campaigns (jobs) in a single screen. Jobs can include a unique ID, name, due date, phase, description, unlimited notes, scheduled start/end dates, actual start/end dates, total job price and Job Manager. Each jobs will contain one or many tasks. Tasks can be grouped within Jobs. Tasks can include Task IDs, name, description, unlimited notes, estimated start/end dates, actual start/end dates, Baseline price, estimated price and actual price. Tasks can include an Item ID (to link with an existing database in another system) and purchase order tracking number to link to other systems.

The method may also enable the review and selection of vendors for each task based on vendor pricing information tracked in the system and track cost savings for using the best bid. The method may also include the ability to automatically create and link a PO (in a database system such as the Bradley Company Spectrum Plus) to a direct mail campaign; the ability to automatically create and link a requisition (in Spectrum Plus) of stocked or print-on-demand materials; the ability to define the pricing (estimate and baseline) of a printed document based on the attributes / specifications that make up the document (e.g., 11 x 14, bi fold, binding options, etc.). Supplier pricing schemes and attributes may be tracked to enable project estimates to be generated based on attributes and quantity to identify the lowest cost providers for a specific job size. The method can be used easily to enable any company to manage and track the detailed tasks required to oversee the production of materials used for a direct mail campaign.

### BRIEF DESCRIPTION OF THE DRAWINGS

Figure 1 is a sample Job List page in a direct mail module;
Figure 2 is a sample Job List options page;
Figure 3 is an exemplary Job Setup page;
Figure 4 is an exemplary Job Search dialog;
Figure 5 is an exemplary Job Manager Search page;
Figure 6 is an exemplary Task list page;
Figure 7 is an exemplary Task List Options page;
Figure 8 is an exemplary Task setup page;
Figure 9 is an exemplary Task Search dialog page; and
Figure 10 is a exemplary Task Owner Search dialog page.

### DETAILED DESCRIPTION OF THE EMBODIMENTS

The system and method of the invention can be implemented on a stand-alone basis or as part of another document management system. For example, the system and method of managing a direct mail campaign can be used with software products, such as the Spectrum Plus (client/server fully integrated administrative, purchasing, invoicing, order entry, warehouse management, and digital image production system), ReqDirect (web based order entry system), and InteliJob (Subscription Management system) of the Bradley Company, a wholly-owned subsidiary of Xerox Corporation. For exemplary purposes, an embodiment of the invention will be described as it was implemented as part of Document Advisor Office (DAO) in the Spectrum Plus and InteliJob products.

Users of the Direct Mail module are any users set up in the Spectrum Plus system as Direct Mail Module users. For DAO installations, users of this module are likely to be any member of the DAO team. For Bradley Company installations, users of this module can potentially be any Spectrum Plus user. The Direct Mail Module provides a relatively inexpensive tool to track direct mail campaigns (or any other type of job) within the Spectrum Plus system.

Users open the Direct Mail Login Page and enter their User ID and Password. The system verifies the entered values and if valid opens the Job List Page (see Job List Page document). While in any non-dialog page (e.g., the Job Setup Page), users discard unsaved changes by clicking the Refresh Toolbar Button on their browsers. The system does not attempt to automatically save any changes when refreshing a page. The system restores the page as it appeared when uses last saved the page (provided dependent data has not changed via other users).

Changes to the InteliJob Page Framework. Login Page. Security is based on Application ID in the Spectrum Plus Application Setup Window. The Direct Mail Module installs a new Application ID of 8889 in the Application Setup Window with an Application Name of IInteliJob-DirectMail. All users belonging to any Spectrum Plus Group ID having this application, as seen in the Group Setup Window, can log in to the Direct Mail module. The InteliJob Choose Group From Group Selection Page does not open when users enter User ID, Password, and click the OK Button in the Login Page. The Login Page has the Direct Mail green color motif. The Direct Mail image appears in the upper left-hand comer. Automatic save occurs without a Save Confirmation Message.

Automatic Save. All non-modal pages have automatic save functionality. For example, the Job Setup Page is non-modal and the Task Setup Page is modal. The documents for each non-modal page define specifically which actions (and only those actions) cause an automatic save. The following describes automatic save functionality common to all non-modal pages:

The system does not automatically save if users do not make any new changes to a page. This overrides the specific actions defined in other documents. Note that values defaulted in by the system when a page opens do not cause an automatic save. Note that if users open the page for inquiry only and do not make changes, then an automatic save does not occur. If these users accidentally make changes, then to discard the changes they must either manually undo their changes or refresh the page. The system does not automatically save when users navigate via their browser's controls. Some examples of this are when users click the Back, Forward, or Refresh Buttons; enter a new URL in the Address Bar and go to the URL; or close their browsers.

Users can use these methods as a way to discard unsaved changes. If the automatic save fails, then the system leaves the Standard Processing Dialog open, cancels the action that initiated the automatic save, and displays an error message. Note that the same result occurs if users do a manual save that fails. The following example in the Job Setup Page illustrates this:

Users create a new job and save it.

Users create another job with the same Job ID.

When the system tries to save the second job, the save fails because all jobs must have a unique Job ID.

Whether users manually save the second job or do something to cause an automatic save (like clicking the Job List Link), the result is the same: the Standard Processing

Dialog remains open and displays an error message explaining why the save failed.

The only difference between the manual and automatic cases is that in the automatic case the primary action was canceled: the Job List Page does not open.

If users cannot correct the problem that caused the save to fail, then they can refresh their browsers and discard their changes.

Date Fields. All date fields must contain a valid date values before being saved. A date value is invalid if one of the following is true: It does not match the system-configured date format (e.g., d/M/yyyy). It does not convert to a valid date (e.g., 32/12/2002 using the this same date format). If users enter an invalid date value and tab out of the date field (or cause the cursor to leave the field), then the system displays a message immediately underneath the date field. If users do not correct an invalid date and attempt to save the page (or cause the it to be automatically saved), then instead of saving the system displays an Alert Message Box with the following massage: One or more errors exist on the page. Please correct the error(s) before proceeding.

Decimal Fields. All decimal fields must contain a valid decimal value before being saved. All decimal values must convert to a numeric value. The decimal field width and precision must be specified in the document containing the decimal field. For example, a 13.4 decimal has a field width of 13 and a decimal precision of 4, which allows for 9 digits to the left of the decimal point and 4 to the right. The value range must be specified in the document containing the decimal field. Each fields definition needs to specify if the field allows or restricts blank, positive, negative, and zero values. Any decimal field display formatting must be specified in the document containing the decimal field.

For example, currency symbols or the zero padding to the right of the decimal point.

Notice that the width, precision, and range combine to specify the maximum and minimum values allowed in the field. For example, a 13.4 decimal field that prohibits negative and zero values has a maximum value of 999999999.9999 and a minimum value of 0.0001. A decimal value is invalid if one of the following is true: It does not convert to a numeric value. It does not fall in its range. It exceeds maximum or minimum value. If users enter a value that does not convert to a numeric value and tab out of the number field (or cause the cursor to leave the field), then the system displays a message immediately underneath the date field.

If users enter a value that does not fall into the fields range or exceeds maximum or minimum values and then tab out of the number field (or cause the cursor to leave the field), then the system displays the message Invalid number immediately underneath the date field, displayed inline like above. The system allows users to exceed the field's decimal precision (enter too many digits to the right of the decimal point). The system discards the extra precision when users save the value. Users do not see the discarded digits until the system redisplays the field's page. If users do not correct an invalid date and attempt to save the page (or cause the it to be automatically saved), then instead of saving the system displays an Alert Message Box with the following massage: One or more errors exist on the page. Please correct.

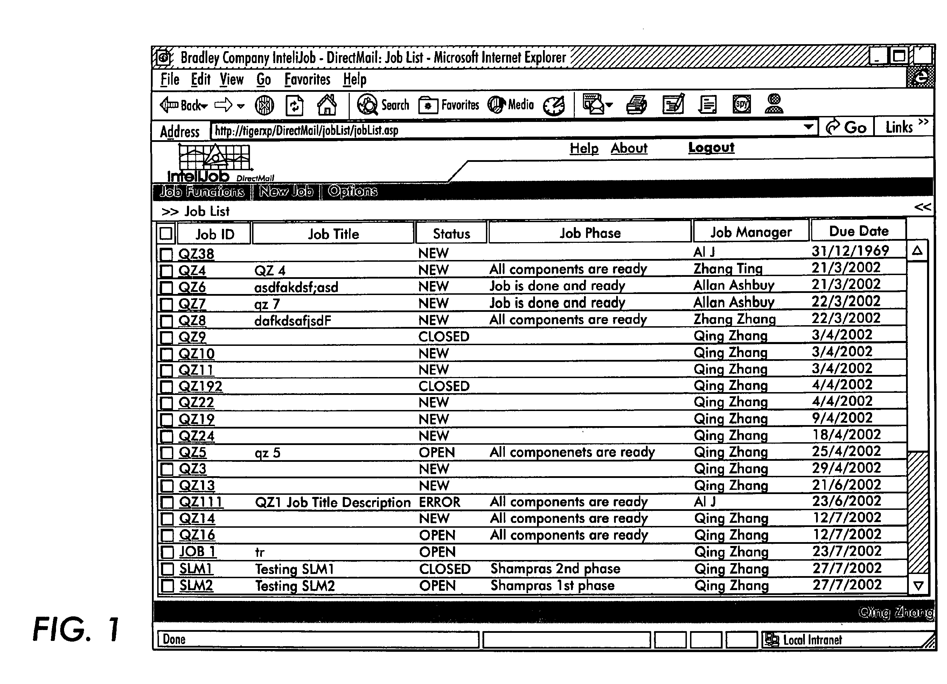

Direct Mail Job List. This page is used to view the job list and manage jobs. This design provides the functions to display and manage Jobs. Users who have been assigned to use the Direct Mail application can view, modify, or execute jobs and are the users of this Page. An exemplary Job List page is shown in Figure 1. The details of the interface for the display and management of jobs are described below.

The Job List Page is displayed when Users successfully log into the Direct Mail Module or when Users click the Job List link from the Job Setup page and Task Setup page. If the logged on Users do not have any options set up, the system redirects them to the Options Page. A detail description of the options page can be found in the description of the Direct Mail Job List Options below. The initial state of the Job List Page: the Display Panel displays "Job List". The Job List contains the following columns Job ID, Job Title, Status, Job Phase, Job Manager and Due Date. A list of jobs is displayed. The list of jobs is retrieved based on options defined for the page. The Job List is sorted based on the Sort Options defined in the Options Page. The Select Check Boxes on the left side of each job in the job list are un-checked by default. There is a link on each Job ID Field in the Job List, which directs Users to the Job Setup Page with information related to the linked Job displayed.

Menu Options on the Job List Menu Bar of the Job List Page. The following Sub Menu Options are under this Menu Option: New Job, Close Selected Job, and Reopen Selected Job. Clicking New Job directs Users to the Job Setup page. The New Job menu item on the main menu bar can also be used for creating new jobs. This menu item also directs users to the Job Setup page. Clicking Close Selected Job Closes Jobs with the Select Check Box checked. If the Close Selected Job menu item is clicked without selecting a job, an error message is displayed, "Please select job(s) which have not been closed." If the Close Selected Job menu item is clicked and all the selected jobs, are already closed, an error message is displayed, "Please select job(s) which have not been closed." If the Close Selected Job menu item is clicked and one or more jobs, which have been selected, are already closed, only the jobs, which have not been closed, are closed.

A Confirmation Message will be displayed if one or more Jobs have been selected and at least one Job Status is not closed. The following confirmation message is displayed, 'The selected Job(s) will be Closed. You can use the Reopen menu option to reopen the closed job(s).' If Users click the OK Command Button on the Confirmation Message Box, the Standard Processing Dialog is displayed. If there is no error, the selected Jobs are closed and the Status of the Jobs are changed to CLOSED.

Closing the Dialog refreshes the Job List Page. If Users click the Cancel Command Button, the selected jobs are not closed and the User returns to the Job List Page. Clicking Reopen Selected Job reopens Jobs with the Select Check Box checked. Reopening a Job means to re-evaluate the Status of the Job based on the statuses of the Tasks in the Job and to re-calculate the Total Cost of the Job. If no Job is selected, an error message is displayed saying, "Please select job(s) which are closed." If all selected Jobs have a Status other than CLOSED, an error message is displayed saying, "Please select job(s) which are closed." If one or more Jobs are selected and at least one Job Status is CLOSED, the selected Jobs are reopened. Nothing happens to the Jobs, which are not closed in the list of selected jobs. Clicking the Options Menu Option directs Users to the Job List Options Page.

Direct Mail Job List Options. Users need to be able to set the sort order and filter out existing jobs in the Job List Page. The Job List Options Page provides a method to set these Job List Page options. All users of the Job List Page use the Job List Options Page. The Direct Mail Module uses the InteliJob Page Framework. Changes to the framework are described above. Users enter the Job List Options Page from the Job List Page.

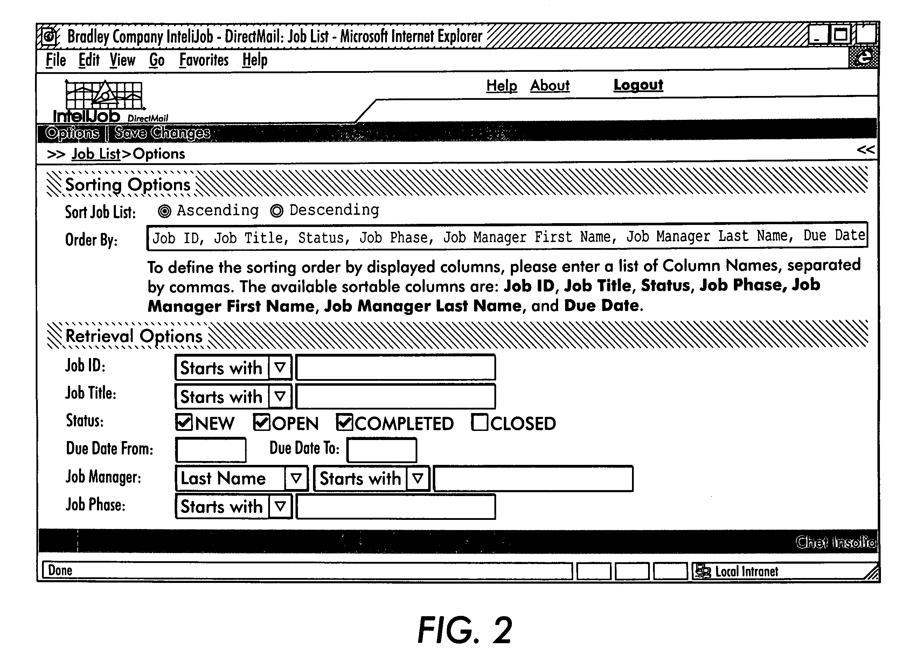

Users open the Job List Options Page to set the display settings for the Job List Page. Users have the ability to specify sort and retrieval criteria. The page appears as shown in Figure 2. When users new to the Job List Options Page open this page, the page default values appear. The system uses the default values for users who have not yet saved an options profile in this page. When all other users open the page, the system displays their last saved options profile. The system has the ability to store an options profile for each Direct Mail user. Users edit the displayed settings in the Sort Options Section to control the order that jobs appear in the Job List Page. Users choose either the Ascending or Descending value for the Sort Job List Field. Users delete all values in the Order By Field. Users create a new sort list in the Order By Field by clicking fields in the Job List sort columns. Users edit the displayed settings in the Retrieval Options Section to limit or expand the number of jobs appearing in the Job List Page. Users optionally choose to enter, edit, or remove any setting in this section, depending on what they want to see in the Job List Page. All fields in this section behave like the Standard Search Dialog. Users click the Save Changes Menu Item to save changes while editing. The system saves all entered changes for the current user. The system uses the saved setting the next time this user enters the Job List Page. Users can optionally skip this step. The system automatically saves changes when leaving the Job List Options page. Users open the Job List Page. The system displays the Job List Page according to the saved option settings.

No field is required. Users can make any field blank, except for the Sort Job List Radio Button. Creating a Sort List for the Order By Field: Users click any Job List sort column. The system adds the clicked sort column to the end Order By sort list, adding a comma separator if necessary. Nothing happens if the clicked column already exists in the sort list. Users can manually type values into the Order By Field. If an entered value does not match any Job List sort column, the system displays a message notifying users of the incorrect value.

Restoring Default Values. Users click the Reset Values Menu Item. The system changes all values on the Job List Options Page to the default values. Setting Due Date Fields: The InteliJob system has the ability to hide the time parts of date values. If this time-hiding functionality is enabled, these values appear to be inclusive. When the Job List Page filters by Due Date, it includes the entered dates and the dates in between days.

Job List Options Page. Referring to Figure 2, the default and reset settings appear as shown. When users move their mouse over the Options Menu Item, it expands to show the Save Changes and Reset All Menu Items. The Save Changes Menu Item appears both on the main menu bar and in the expanded Option Menu. Both locations invoke the same functionality. The column titles of the Job List follow the Order By Field. These columns titles are the Job ID, Job Title, Status, Job Phase, Job Manager First Name, Job Manager Last Name and Due Date. Each column title invokes functionality that sets the Order By Field. This document refers to these columns as Job List sort columns.

To define the sort order by displayed columns, the user enters a list of Column Names, separated by commas. The available sortable columns are: Job ID, Job Title, Status, Due Date, Job Manager Last Name, Job Manager First Name and Job Phase. To set the Job List sort order by entering the Job List columns to sort by. Separate each column with a comma. The available columns are Job ID, Job Title, Status, Due Date, Job Manager Last Name, Job Manager First Name and Job Phase.

Direct Mail Job Setup. Users need an entry point for creating, editing, and viewing a Direct Mail job in the Direct Mail system. The Job Setup Page is where users begin these processes. Users of the Job Setup Page are any Direct Mail Module users, though not all these users necessarily create or edit the job header information displayed on this page. For DAO installations, users of this page are likely to be any member of the DAO team and the Document Advisors that work with the DAO team. The Job Setup Page gives users access to jobs managed and recorded in the InteliJob system.

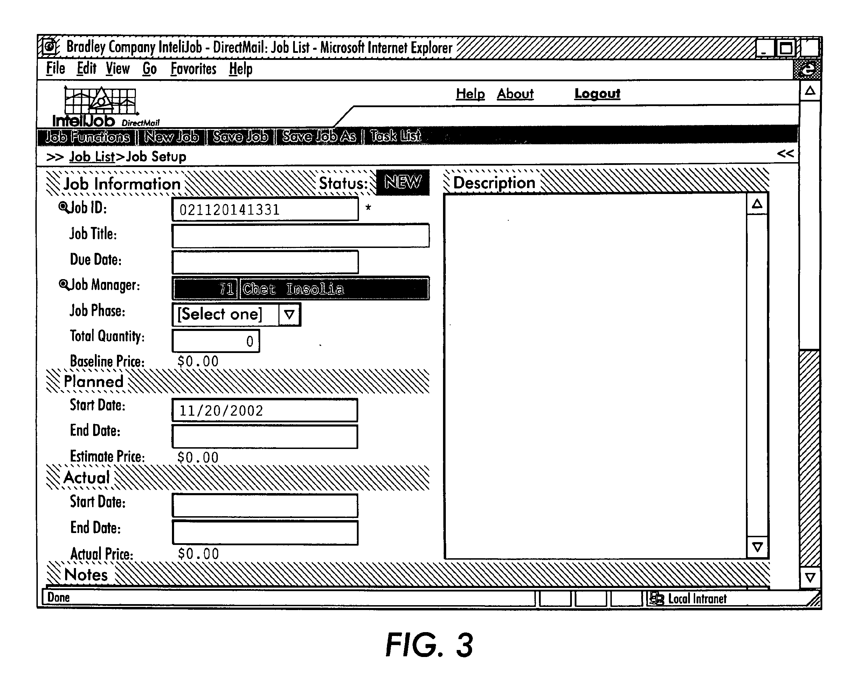

Users enter the Job Setup Page in one of two ways: By creating a new job or by retrieving an existing job. Figure 3 is an exemplary Job Setup page. The displayed fields, including some of their properties, are listed in Table 1.

Creating a New Job. The system sets the default values, as shown in Figure 3 (also see Table 1). Users enter job information. Users click the Save Job Menu Item to save the new job. Users click the Task List Menu Item to add tasks to the new job, and the system opens the Task List Page (note that the system does not require users to set up task). After adding tasks to the new job (see the Direct Mail Task List and Direct Mail Task Setup documents), users return to the Job Setup Page (note that the system does not require users to return to the Job Setup Page). The system redisplays the job. Note that if users do not change any task's Status value or price information, then the Job Status remains NEW and all prices appear as zero.

Editing an Existing Job. The system retrieves the job in the Job Setup Page. Users enter or change job information in any editable field. Users click the Save Job Menu Item to save the job. Users click the Task List Menu Item to edit or add tasks to the existing job (note that the system does not require users to do this when editing a task), and the system opens the Task List Page. After editing or adding tasks to the existing job (see the Direct Mail Task List and Direct Mail Task Setup documents), users return to the Job Setup Page. The system redisplays the job. Note that if users changed the Task Status values or price information for any tasks in the job, then the Job Status and corresponding price information values could change to reflect the new values.

Displaying an Existing Job. See Table 1 for definitions of which fields are editable and calculated. All editable fields appear the same as when the system last saved the job. The system reevaluates all calculated fields on the Job Setup Page. The Job Status value summarizes the Task Status values of all tasks in the job. The Baseline Price, Planned Price, and Actual Price values display the sum of the all corresponding prices of all tasks in the job.

Job Setup Field Descriptions. See Table 1 for a summary of the fields described in this section. This table includes information on field constraints and validations. All fields are text fields with character data unless otherwise noted. The system prevents users from saving field entries that exceed the maximum number of characters (actual limits are only specified in the table). The system ignores additional text input when users meet the maximum limit. The Description and Notes Fields use a different method to the maximum character restriction (see below). Additional validations are described below. Note that if a job has been closed (Job Status is CLOSED), then the system prevents users from saving any new changes to a job.

Job ID. This value uniquely names a job in the system. This value appears in the Job List Page, Job List Options Page, and Job Search Dialog. The Job ID is the only required field on the Job Setup Page. Users must either accept the default value or enter a new one. For example, users can overwrite the default value with an externally generated reference number (PO or campaign number, etc.). If users choose a Job ID that already exists in the system and attempt to save the job (or cause it to be automatically saved), then the system prevents the job from being saved. The system displays the following message in the Processing Dialog: Job ID <duplicate Job ID> has been used by another Job. Please enter a different Job ID. If users enter a blank Job ID (or one with all space characters) and attempt to save the job (or cause the it to be automatically saved), then the system prevents the job from being saved. The system displays the following message in an Alert Message Box: Please enter a value in the Job ID Field before proceeding.

Job Title. This value is a descriptive title for the job. This value appears in the Job List Page, Job List Options Page, and Job Search Dialog.

Job Status. This value summarizes the Task Status values of all tasks in a job. This value appears in the Job List Page, Job List Options Page, and Job Search Dialog. This field is not editable, and its value is calculated by the system. When this value is CLOSED, the job and its tasks cannot be altered.

Due Date. This value is the date some commitment has been made to a client or some other external party. This value appears in the Job List Page, Job List Options Page, and Job Search Dialog. This field must have a valid date value before being saved.

Job Manager. This value specifies the person responsible for managing a job. This value appears in the Job List Page, Job List Options Page, and Job Search Dialog. Users must enter values in this field using the Job Manager Search Dialog (the field is not enabled for text entry). This search dialog allows users to make any person (as seen in the Spectrum Plus Person Setup Window) in the Spectrum Plus system the Job Manager. This field actually consists of two fields, the Job Manger ID and Job Manager First and Last Name. The Job Manager ID is the Person ID of the person selected in the search dialog. The Job Manager First and Last Name is the First Name and Last Name of the person selected in the search dialog. The system stores the Job Manager First and Last Name values independently of their source person in the Spectrum Plus Person Setup Window. If these values change in the Person Setup Window, the job still displays the old values.

Job Phase. This value is a more flexible, manually-set job status. This value appears in the Job List Page, Job List Options Page, and Job Search Dialog. The system restricts Job Phase values using a drop-down list box. Spectrum Plus System Administrators set up the values appearing in the drop-down. The [Select One] value always appears in the drop-down. If users choose this value, then the Job Phase values in the Task List Page appear empty.

Baseline Price. This value is the price a Job Manager is expected out perform (or at least meet). The difference between the Baseline Price and the Actual Price of a job demonstrates cost savings obtained by the Job Manager. This value is the sum of the task Baseline Price values for all tasks in the job. This field is not editable, and its value is calculated by the system. This value is a 13.4 decimal value. The value can be positive, negative, zero, or blank. The system formats the field with a currency symbol and right-fills decimal zeros.

Quantity. This value holds job quantity information for jobs having defined quantity. Whether a job needs a job quantity is determined by the business requirements of a job. This value must be 11.2 decimal value numeric before being saved. The value can be positive, negative, zero, or blank. The system does not perform any display formatting on this field.

Description. The Description is meant for a job definition summary. The system allows users to exceed the character limits for this field, but does not save any additional characters. If users exceed the character limits for these fields and tab out (or cause the cursor to leave the field), then the system displays an Alert Message Box with the following message: The description field can contain at most 4000 characters. The additional characters (starting with "<first twenty character over 4000>") will not be saved. The system discarded these characters when users cause the system to save and redisplay the job in the Job Setup Page.

Planned Start Date. This value is the date the Job Manger estimates work on a job to begin. This field must have a valid date value before being saved. Setting this value only affects new jobs created by copying from this job.

Planned End Date. This value is the date the Job Manger estimates work on a job to complete. This field differs from the Due Date in that it does not communicate any externally committed date. This field must have a valid date value before being saved. Setting this value only affects new jobs created by copying from this job.

Estimate Price. This value is an estimate of the total price of a job. This value is the sum of the task Estimate Price values for all tasks in the job. This field is not editable, and its value is calculated by the system. This value is a 13.4 decimal value. The value can be positive, negative, zero, or blank. The system formats the field with a currency symbol and right-fills decimal zeros.

Actual Start Date. This value is the date the work actually began on a job. This field must have a valid date value before being saved. Setting this value has no effect on any task's dates or any other job's dates.

Actual End Date. This value is the date the work actually completed on a job. This field must have a valid date value before being saved. Setting this value has no effect on any task's dates or any other job's dates.

Actual Price. This value is the actual total price of a job. This value is the sum of the task Actual Price values for all tasks in the job. This field is not editable, and its value is calculated by the system. This value is a 13.4 decimal value. The value can be positive, negative, zero, or blank. The system formats the field with a currency symbol and right-fills decimal zeros.

Notes. This value logs the progress of a job. The Notes Section is meant to be a running commentary on the status of a job. Users add comments to this section to report on the progress of a job, especially notes describing events not captured in any other job or task information fields. The system allows users to exceed the character limits for these fields while the cursor remains within these fields. If users exceed the character limits for these fields and tab out (or cause the cursor to leave the field), then the system displays an Alert Message Box with the following message: The notes field can contain at most 4000 characters. The additional characters (beginning with "<first twenty character over 4000>") will not be saved. The system discarded these characters when users cause the system to save and redisplay the job in the Job Setup Page.

Alternate Processes. Task List - Opening the Task List Page. Users click the Task List Menu Item to view, edit, or add tasks in a job. The system opens the Task List Page for the job in the Job Setup Page. If the job is new and has not yet been saved or if the job has unsaved changes, then the system instead displays the Alert Message Box with the message Please save the Job before opening the Task List Page. and prevents users from proceeding.

Save Job As - Creating a New Job from an Existing Job. The system allows users to create a new job by copying an existing job. Users can copy any job appearing in the Job Setup Window. Users can do this at any point in any workflow (while on the Job Setup Page) described in this document. Users click the Save Job As Menu Item. The system opens the Save Job As Dialog. Users either accept or overwrite the default New Job ID and Planned Start Date (default values are determined in the same way as those in the Job Setup Page). Users enter these values just like the Job ID and Planned Start Date in the Job Setup Page. For example, users must enter a unique Job ID, and the Planned Start Date must be in the correct format but is not required. Users click the OK Button to proceed or the Cancel Button to return to the Job Setup Page. The system creates a new job having the same Job Setup Page information, the same number of tasks in the Task List Page, and the same Task Setup Page information for each task. The system retrieves the new job and displays it in the Job Setup Page. The following differences between the new and source job appear: The Job ID of the new job is the New Job ID value entered in the Save Job As Dialog. The Job Status of the new job is NEW. The Planned Start Date is the Planned Start Date entered in the Save Job As Dialog. The Due Date and Planned End Date are calculated by the system. The Actual Start Date, Actual End Date, and Actual Price of the new job are blank. Users customize the job information for the new job in the Job Setup Page. Users open the Task List Page and open each task in the Task Setup Page.

The following differences between the new and source tasks appear: The Task Status of each task is NEW. The Due Date, Planned Start Date, and Planned End Date are calculated by the system. The Actual Start Date, Actual End Date, and Actual Price of each new task are blank. Users can add or remove new tasks while in the Task List Page for each task. Users customize task information while in the Task Setup Page for each task. After users finish all customizations, the new job is ready for processing.

New Job - Creating a New Job from within the Job Setup Page. The system allows users to create a new job without going back to the Job List Page. Users can do this at any point in any workflow (while on the Job Setup Page) described in this document. Users click the New Job Menu Item. The system clears the Job Setup Page and restores its default values. Users create a new job.

Delete Job - Deleting a Job. The system allows users to delete a job. Users can delete any job appearing in the Job Setup Page that is not closed. Users can do this at any point in any workflow (while on the Job Setup Page) described in this document. Users click the Delete Job Menu Item. If the job is closed, then the system displays an Alert Message Box with the message The Job is closed. The user cannot change its content. The system prompts users with the message This job will be permanently deleted. using a Confirmation Message Box. Users click the OK Button to proceed or the Cancel Button to return to the Job Setup Page. The system removes all records associated with the job from the system. The system deletes both the job and all its tasks. Note that deleting a job is not reversible from within the system. The system clears the Job Setup Page and restores its default values.

Close Job - Closing an Open Job. The system allows users to close a job. The Close Job functionality is meant to provide a way for users to put a job on hold and preserve all its content. Users can filter out closed jobs in the Job List Page. Users can close any job appearing in the Job Setup Page. Users can do this at any point in any workflow (while on the Job Setup Page) described in this document. Users click the Close Job Menu Item. If the job is already closed, then the system ignores the clicked menu item. The system sets the Job Status to CLOSED. The system preserves the Task Status values of each task in the job. Note that closing a job is always reversible from within the system. The system clears the Job Setup Page and re-retrieves the closed job. The only change to the job is the Job Status. The system prevents users from saving any additional changes to a closed job. Users reopen the closed job when they are ready to resume work on a job. If work never resumes on a closed job, users leave the job closed.

Reopen Job - Reopening a Closed Job. The system allows users to reopen a job. The Reopen Job functionality is meant to provide a way for users to resume work on a job that was previously put on hold. Users can reopen any job appearing in the Job Setup Window. Users can do this at any point in any workflow (while on the Job Setup Page) described in this document. Users click the Reopen Job Menu Item. If the job is not closed, then the system ignores the clicked menu item. The system recalculates the Job Status. The system clears the Job Setup Page and re-retrieves the reopened job. The only change to the job is the Job Status. The reopened job appears in the Job Setup Page, Task List Page, and Task Setup Page exactly as it appeared when it was closed. Users resume work on the reopened job.

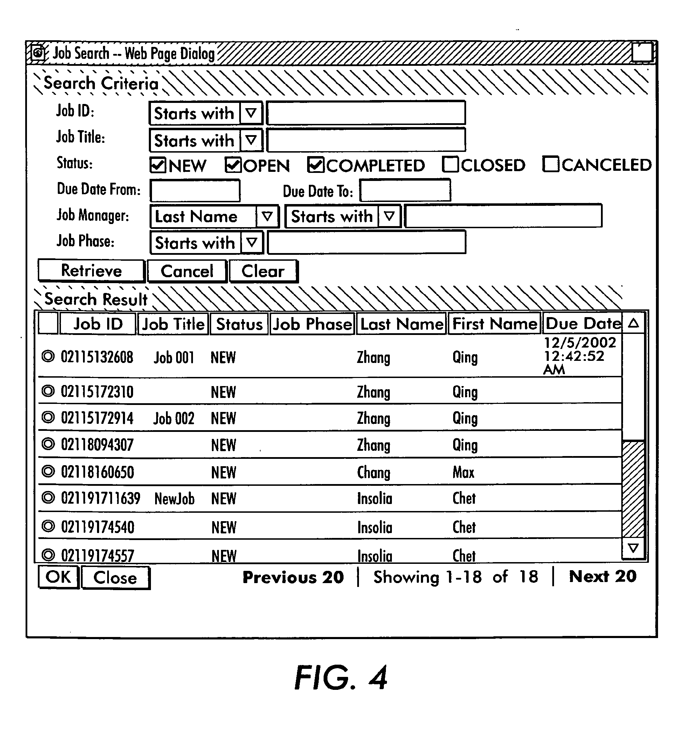

Job Search - Navigating to an Existing Job from within the Job Setup Page. The system allows users to jump directly from one job to another without going back to the Job List Page. Users can search for and retrieve any job saved in the system into the Job Setup Window. Users can do this at any point in any workflow (while on the Job Setup Page) described in this document. Users click the search icon along side the Job ID Field to begin searching for a job. The system opens the Job Search Dialog. The dialog appears as shown in Figure 4. Users enter criteria and select a job. The system retrieves and displays the selected job in the Job Setup Page. Users proceed to any workflow described in this document. If any unsaved changes exist in the Job Setup Page prior to clicking the search icon, then the system automatically saves these changes before opening the Job Search Dialog. This occurs even if users click the Cancel Button in the Job Search Dialog.

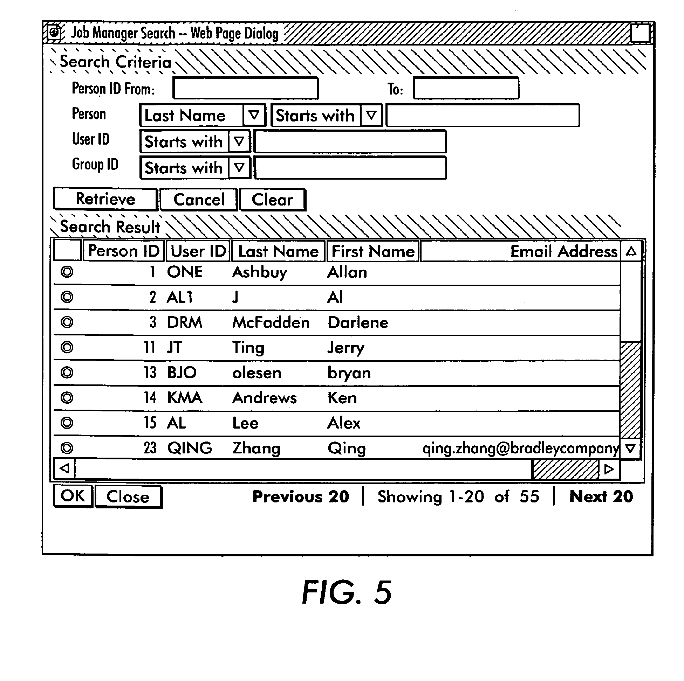

Job Manager Search - Searching for a Job Manager. Users click the search icon along side the Job Manager Field. The system opens the Job Manager Search Dialog. The dialog appears as shown in Figure 5. Users enter criteria, retrieve a list of persons in the system, and select a person. The system populates the Job Manager ID Field with the selected person's Person ID. The system populates the Job Manager First Name and Last Name Fields with the selected person's first and last names.

Creating a New Job from a Job Template. The system allows users to set up a set of Job Templates that can be used as a starting point for creating new jobs. Users search for a template job and retrieve it into the Job Setup Page. Users copy the template job and use the copy to create their new job.

Navigating to the Task List Page and Task Setup Page. Users must pass through the Job Setup Page to view and edit tasks assigned to a job. Presently, the system only provides this one method to navigate to a job's tasks. Since most of the work done on a job occurs in its tasks, users will likely open this page simply to navigate to the job's tasks. For example, users enter the Job Setup Page by retrieving an existing job and click the Task List Menu Item without making any changes to the job information.

Editing a Closed Job. The system prevents users from saving any changes to a closed job. A closed job is any job whose Job Status is CLOSED. If users click the Save Job Menu Item (or cause the job to be automatically saved) for a closed job, then the system displays an Alert Message Box with the message The Job is closed. The user cannot change its contents. Users must reopen the job before saving changes to it. The system does allow users edit the job information for a closed job. If users want to save their changes, they can use the Save Job As functionality. The system allows users to open the Task List Page but prevents users from adding new tasks or saving changes to existing tasks. Like the Job Setup Page, the Task Setup Page allows user to make, but not save, changes. Note that canceled jobs (Job Status is CANCELED) are different from closed jobs and that the system does allow users to save changes to canceled jobs.

Sub-Processes. Automatic Saving in the Job Setup Page. The system attempts an automatic save when users make some changes on the Job Setup Page and then perform any of following actions: Users click the Job List Link in the Display/You are here Panel (to go back to the Job List Page). Users click the New Job Menu Item. Users click the Save Job As Menu Item. Users click the Close Job Menu Item. Users click the Reopen Job Menu Item. Users search for a job by clicking the job search icon. The system does not automatically save when users have a new job with no changes and then perform any of the above actions. A new job with no changes is one that has not yet been saved either automatically or manually. A new job displays only the default Job Setup Page values.

Calculating the Job Status. The system calculates the Job Status by summarizing the Task Status values of all the tasks belonging to the job. The system calculates this using the following procedure (and stops as soon as it finds a value): The system gets the current Job Status value of the job whose status is being calculated. If the Job Status is CLOSED, then the Job Status is CLOSED. The system finds all tasks belonging to the job and gets each task's Task Status value. If all Task Status values are CANCELED, then the Job Status is CANCELED. The system discards all tasks whose status is CANCELED from this procedure (canceled tasks do not affect the Job Status unless all are canceled). If all the remaining Task Status values are NEW, then the Job Status is NEW. If all the remaining Task Status values are COMPLETED, then the Job Status is COMPLETED. Otherwise if at least one task is not NEW or COMPLETED then the Job Status is OPEN. Note that Task Status values not explicitly mentioned above (like IN PROCESS) yield a Job Status of OPEN. Note that the system actually stores numerical code equivalents for each status value and then translates the numerical code to the displayed status.

Calculating Job Prices. The system calculates the Job Baseline Price, Job Planned Price, and Job Final Price by summing up the corresponding prices on all active tasks belonging to the job. An active task is one whose status is not CANCELED. The system calculates this using the following procedure: The system finds all tasks belonging to the job and gets each task's Task Status value. The system discards all tasks whose status is CANCELED from the job price calculation. The system gets each task's Task Baseline Price, Task Planned Price, and Task Final Price values. The Job Baseline Price is the sum of the Task Baseline Price values. The Job Planned Price is the sum of the Task Planned Price values. The Job Final Price is the sum of the Task Final Price values. The system treats blank task prices as zero values.

Getting the Default Job ID. The system determines the default Job ID value from the system date and time of the web browser. The Job ID has the yyMMddhhmmss display format. For example, if the browser's date is December 3^{rd}, 2002 and its time is 4:15 PM and 32 seconds, then the Job ID is 021203161532. The default value display format is not affected by Windows OS Regional Options.

Calculating New Job and Task Dates During Save Job As. The main goal of calculating dates in the Save As functionality is to make all job and task dates appear as if the whole job were picked up and moved to a new start date. The relative differences between these dates do not change from source to new job. In this section, the source job is the job appearing in the Job Setup Page when users click the Save Job As Menu Item, and the new job is the job appearing in this page when the Save Job As functionality completes processing. The system calculates these dates using the following formula: The system gets the difference between new job's Planned Start Date and the source job's Planned Start Date. Note that the new job's Planned Start Date is the date users enter in the Save Job As Dialog. The difference found by counting the number of days between the two dates. The difference is negative if the new job's date occurs before the source job's date. The difference is not adjusted for non-workdays. If either of these values are blank, then all calculated dates are blank and the system stops its date calculation. The new date value (in the new job or task) is its corresponding source date value (in the source job or task) plus the date difference found above: New Date = Source Date + Date Difference. The system does this for the Due Date and Planned End Date in the new job and the Due Date, Planned Start Date, and Planned End Date in each task of the new job. If a source date is blank, then the corresponding new date is also blank. The following example illustrates the date calculation (date values in the M/d/yyyy format): Users copy a job with two tasks. The new job's Planned Start Date is 1/1/2002 (the value users enter in the Save Job As Dialog), and source job's Planned Start Date is 1/11/2002 - a date difference of 10 days.

The new and old dates appear as follows:

| | Source Job | New Job |
|---|---|---|
| [ Job Dates ] | | |
| Due Date | 1/9/2002 | 1/19/2002 |
| Planned End Date | 1/8/2002 | 1/18/2002 |

| [ Task One Dates ] | | |
|---|---|---|
| Due Date | 1/9/2002 | 1/19/2002 |
| Planned Start Date | 1/2/2002 | 1/12/2002 |
| Planned End Date | 1/4/2002 | 1/14/2002 |

| [ Task Two Dates ] | | |
|---|---|---|
| Due Date | <blank> | <blank> |
| Planned Start Date | 1/3/2002 | 1/13/2002 |
| Planned End Date | 1/8/2002 | 1/18/2002 |

Environment. Setting Up Job Templates. Users will likely want to set up some job templates which become a starting point for all new jobs. Use the workflow described below to create the template jobs. Flag these template jobs using some searchable criteria. For example, prefix template Job ID values with T-.

Setting Up Job Phase Values. System Administrators need to populate the Job Phase Drop-down List. Enter these in the Spectrum Plus Code Setup Window for the Type ID of JOBPHASE.

Fields in the Job Setup Page. This table lists all fields appearing on this page. Not all field names mentioned in this document have titles displayed on the Job Setup Page. The Display Name part of the Field Name column translates field names used in this document to the displayed field titles. The display names appear in Figure 1. Also defined in this table: Fields users can edit. Fields calculated by the system (for non-editable fields only). Edit limitations placed fields: the number of characters the system allows users to enter in a field (if applicable). Searchable fields (see Comments column). Fields affected by system configurations.

**Table 1.**

| Fields in the Job Setup Page | | | |
|---|---|---|---|
| Field Name Display Name (if different) | Editable / Calculated | Edit Limitations | Comments |
| Job ID | Yes / No | 20 char max | Searchable |
| Job Title | Yes / No | 20 char max | |
| Due Date | Yes / No | 254 char max | Configurable system-wide date format |
| Job Manager | Yes * / No | N/A | Searchable ( * editable via search only); first and last name display order reversible using a system-wide configuration |
| Job Phase | Yes / No | Drop-down list | Includes all Code ID values whose Type ID is JOBPHASE plus the [Select One] empty value. |
| Quantity | Yes / No | 9 char max | Zero and negative values allowed; up to two decimal values allowed (the system truncates additional decimal precision) |
| Planned Start Date Start Date (under Planned Band) | Yes / No | 40 char max | Must convert to a configurable system-wide date format |
| Planned End Date End Date (under Planned Band) | Yes / No | " | " |
| Actual Start Date Start Date (under Actual Band) | Yes / No | " | " |
| Actual End Date End Date (under Actual Band) | Yes / No | " | " |
| Description | Yes / No | 4000 char max | System truncates extra characters when users make the cursor leaves the field |
| Notes | Yes / No | " | " |
| Job Status Status (in Job Information Band) | No / Yes | N/A | See 0; configurable system-wide display value |
| Baseline Price | No / Yes | " | See 0; configurable system-wide currency format |
| Planned Price | No / Yes | " | " |
| Actual Price | No / Yes | " | " |

Default Values for a New Job. This table defines the default values appearing the in the Job Setup Page when users create a new job.

**Table 2**

| Default Values for a New Job | | |
|---|---|---|
| Field Name | Default Value | Comment |
| Job ID | Date and time stamp | |
| Job Manager ID | Current user Person ID | |
| Job Manager First and Last Name | Current user Last Name | |
| Job Phase | [Select One] | Represents an empty value |
| Quantity | 0 | |
| Planned Start Date | Today's date | Use web browser's date |
| Job Status | NEW | Configurable system-wide display value |
| Baseline Price | 0 | Configurable system-wide currency |
| Planned Price | 0 | Configurable system-wide currency |
| Actual Price | 0 | Configurable system-wide currency |

Calculating the Job Status. Each Job Status value and the way the system calculates it are summarized in this table. Unless a job is closed, the system derives from these values from the Task Status values belonging to a job. Note that the system does not actually store these values directly and instead stores a numerical code with a job record. The Database Value column gives the stored numerical code.

**Table 3**

| Calculating the Job Status | | |
|---|---|---|
| Status Value | Description | Database Value |
| NEW | All tasks are NEW ^{1,} ² | 1 |
| OPEN | At least one task is not NEW or COMPLETED ^{1,} ² | 2 |
| COMPLETED | All tasks are COMPLETED ^{1,} ² | 3 |
| CLOSED | Job has been manually closed. Ignore all task status values. | 4 |
| CANCELED | All tasks are CANCELED ¹ | 5 |

| | | |
|---|---|---|
| 1 And job is not CLOSED. | | |
| 2. And not all tasks are CANCELED. And ignore ones that are CANCELED. | | |

Direct Mail Task List. This page is used to view the task list and manage tasks. This design provides the functions related to the display and management of tasks. Users who have been assigned to use the Direct Mail application can view, modify tasks. The section describes the interface for the display and management of tasks.

Main Processes. Users come to this page from the Task List menu item on the Job Setup page. Menu- New Task - When menu item is clicked, Users are directed to the Task Setup page for creating new tasks. Delete Selected Task - This menu item is used to delete selected tasks. Options - When this menu item is clicked, Users are directed to the Task List Options page.

Initial State- When the page is opened the following fields and values are displayed. If Task List Options have been set up already then - All menu items are enabled. All links in the display panel are enabled. The Job ID link on the display panel shows the parent job id that the task belongs to. The row beneath the display panel shows the Job Title, Job Phase, Due Date of the parent job. Tasks belonging to the job are displayed based upon the options set up by users on the options page. Task list is sorted based upon the options set up.

The Select Check Boxes on the left side of each task in the Task List are un-checked by default. There is a link on each Task ID Field in the Task List, which directs Users to the Task Setup Page with information related to the linked task displayed. If Task List options have not been set up then - Users are directed to the Options page. The display panel shows the following: Job List - When Users click this link they are directed to the Job List page. Job Setup - When Users click this link they are directed to the Job Setup page. When the Job Setup page opens, information related to the parent job for the task is displayed in it.

Task List. Job Id - This displays the job id of the job the task belongs to. When Users click this link they are directed to the Job Setup page. When the Job Setup page opens, information related to the parent job for the task is displayed in it. Beneath the display panel another row displays the Job Title, Job Phase, Due Date and the Baseline price for the parent job. A list of tasks is displayed. The Task List displays the following columns: Task Order, Group, Task Name, Status, Owner, Est. Start Date, Est. End Date. There is a link on each Task ID Field in the Task List, which directs Users to the Task Setup Page with information related to the linked task displayed.

Alternate Processes. Delete Task. The Delete Selected Task menu item can be clicked to delete selected tasks. If this menu item is clicked, but no task has been selected then, an error message is displayed, "There are no tasks selected. Please select a task and try again." If this menu item is clicked and one or more tasks have been selected, a confirmation message is displayed, "The selected Task(s) will be deleted from Job<Job Id>. Do you want to continue to delete the selected task(s)?" If Users click the OK Command Button on the Confirmation Message Box, the Standard Processing Dialog is displayed. If there in no error, the selected tasks are closed and the Status of the tasks are changed to CLOSED.

Closing the Dialog refreshes the Task List Page. If Users click the Cancel Command Button, the selected tasks are not closed and the User returns to the Task List Page.

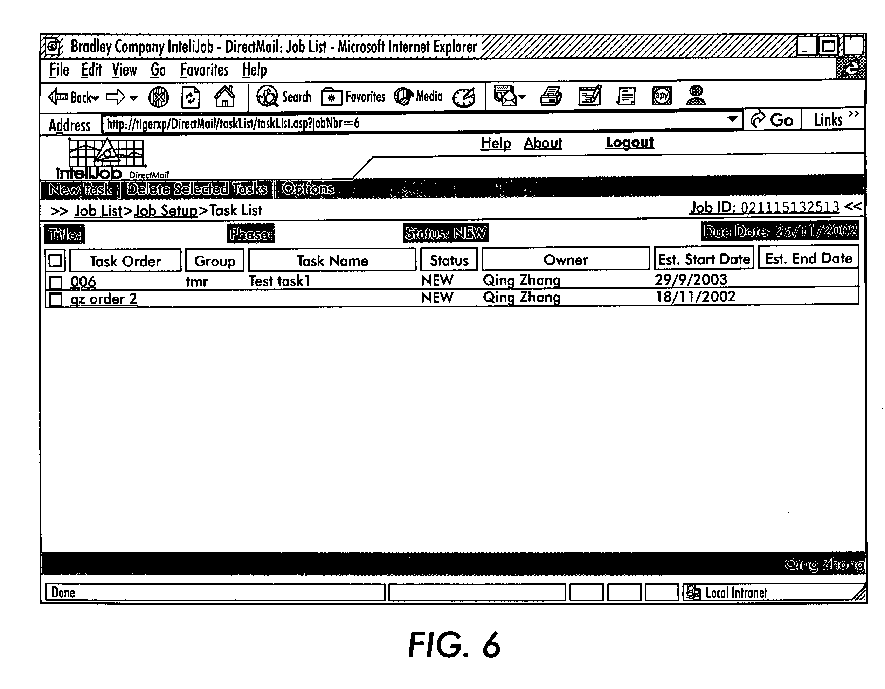

Direct Mail Task List Options. Users need the ability to set sort order and filter out existing tasks in the Task List Page. The Task List Options Page provides a method for to set these Task List Page options. All users of the Task List Page use the Task List Options Page. An exemplary task list page is shown in Figure 6.

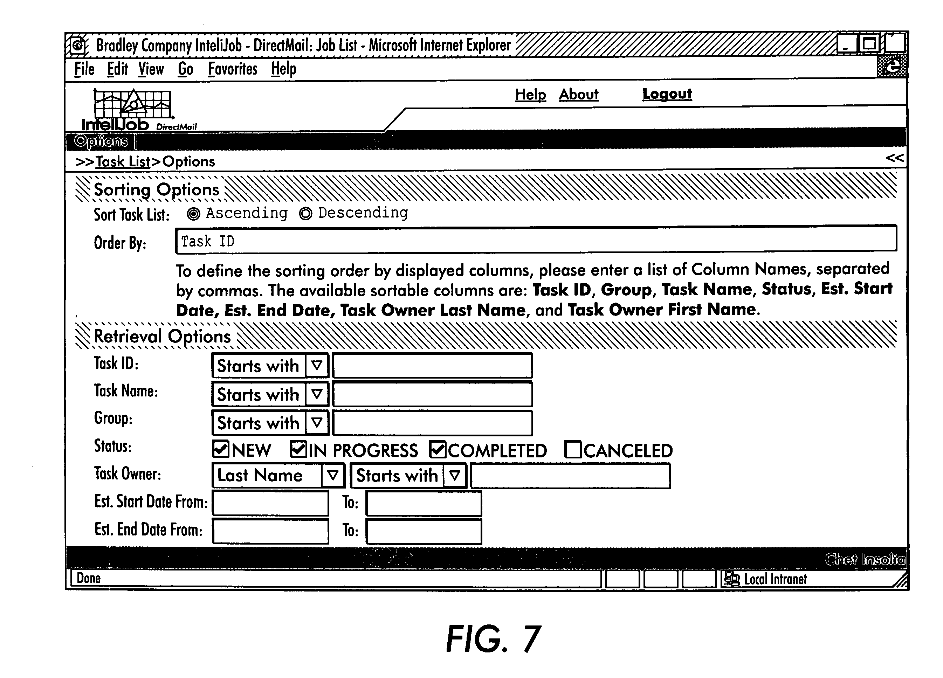

Main Processes. Users open the Task List Options Page to set the display settings for the Task List Page. Users have the ability to specify sort and retrieval criteria. The page appears as shown in Figure 7. When users new to the Task List Options Page enter, the page default values appear. The system uses the default values for users who have not yet saved an options profile in this page. When all other users enter, the system displays the their last saved options profile. The system has the ability to store an options profile for each Direct Mail user. Users edit the displayed settings in the Sort Options Section to control the order that tasks appear in the Task List Page. Users choose either the Ascending or Descending value for the Sort Task List Field. Users delete all values in the Order By Field. Users create a new sort list in the Order By Field by clicking on field in the Task List sort columns. Users edit the displayed settings in the Retrieval Options Section to limit or expand the number of tasks appearing in the Task List Page. Users optionally choose to enter, edit, or remove any setting in this section, depending on what users want to see in the Task List Page. All fields in this section behave like the Standard Search Dialog. Users click the Save Changes Menu Item to save changes while editing. The system saves all entered changes for the current user. The system uses the saved setting the next time this user enters the Task List Page. The system automatically saves changes when leaving the Task List Options page. Users open the Task List Page. The system displays Task List Page according to the saved option settings.

Alternate Processes. Required Fields: No field is required. Users can make any field blank, except for the Sort Task List Radio Button. Creating a Sort List for the Order By Field: Users click on any Task List sort column. The system adds the clicked sort column to the end Order By sort list, adding a comma separator if necessary. Noting happens if the clicked column already exists in the sort list. Users can manually type values into the Order By Field. If entered value does not match any Task List sort column, the system displays a message notifying users of the incorrect value.

Restoring Default Values: Users click the Reset Values Menu Item. The system changes all values on the Task List Options Page to the default values.

Setting Due Date Fields: The InteliJob system has the ability to hide the time parts of date values. If this time-hiding functionality is enabled, these values appear to be inclusive. When the Task List Page filters by Estimate Start Date and Estimate End Date , it includes the entered dates and the dates in between days.

Direct Mail Task Setup. Users need to create, edit, and view the tasks belonging to a Direct Mail job in the InteliJob system. The Task Setup Page is where users perform these processes. Users of the Task Setup Page are any Direct Mail Module users. For DAO installations, users of this page are likely be any member of the DAO team. The Task Setup Page give users access to the tasks belonging to jobs managed and recorded in the InteliJob system.

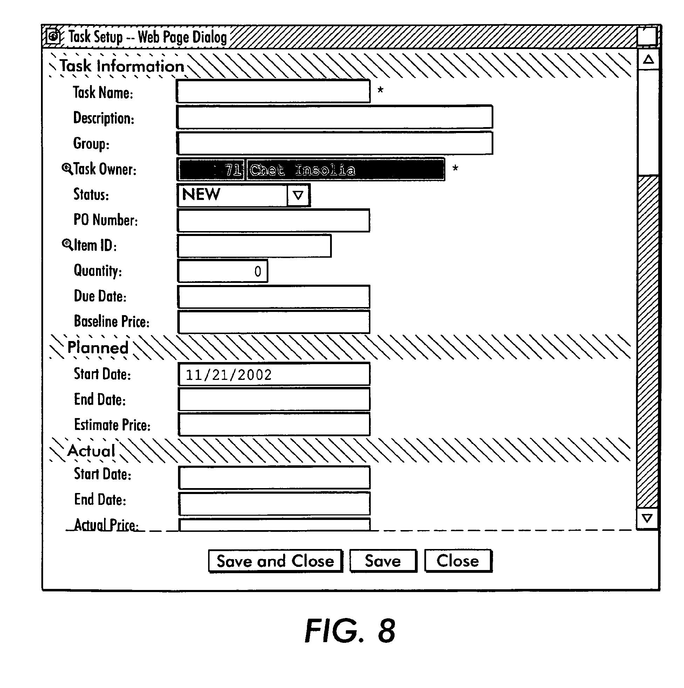

Main Processes. Users enter the Task Setup Page from the Task List Page in one of two ways: Users click the Add Task Menu Item in the Task List Page. Users click any Task Order Link in the Task List Page. The system opens the Task Setup Page in a modal dialog over the Task List Page, which effectively makes the Task List Page display only. The page appears as shown in Figure 8. The displayed fields, including some of their properties, are listed in Table 4.

Add Task - Creating a New Task. The system sets the defaults values, as shown in Figure 8 (also see Table 5). Users enter task information. Users click the Save and Close Button to save the new task. The system saves the task, adds the new task to the end of the Task List Page, closes the Task Setup Page, and returns them to the Task List Page.

Open Task - Editing an Existing Task. The system opens the clicked task in the Task Setup Page. All fields are unchanged since the task was last saved. Users enter or edit task information. Users click the Save and Close Button. The system saves any changes to the task, closes the Task Setup Page, and returns them to the Task List Page.

Task Setup Fields. See Table 5 for a summary of the fields described in this section. This table includes information on field constraints and validations. All fields are text fields with character data unless otherwise noted. The system prevents users from saving field entries that exceed the maximum number of characters (actual limits are only specified in the table). The system ignores additional text input when users meet the maximum limit. The Notes Field uses a different method to the maximum character restriction (see below). Additional validations are described below. Note that if the task's job has been closed (Job Status is CLOSED), then the system prevents users from saving any new changes to a job.

Task Name. This value names a task in a job. This value appears in the Task List Page and Task List Options Page. The Task Name is the only required field on the Task Setup Page. If users enter a blank Task Name (or one with all space characters) and tab out (or cause focus to leave the field), then the system displays the inline message Field value is required. beneath the field. If users enter a value and tab out, then the inline message disappears. If users attempt to save the task without entering a value, then the system prevents the task from being saved. The system displays the following message in an Alert Message Box: Please correct error(s) on this page.

Description. This value is a descriptive title for the task. This value appears in the Task List Page and Task List Options Page.

Group. The value allows sets of tasks to be grouped together on the Task List Page. This value appears in the Task List Page and Task List Options Page.

Task Owner. This value specifies the person responsible for managing work on a task. This value appears in the Task List Page and Task List Options Page. Users must enter values in this field using the Task Owner Search Dialog (the field is not enabled for text entry). This search dialog allows users to make any person (as seen in the Spectrum Plus Person Setup Window) in the Spectrum Plus system the Task Owner. This field actually consists of two fields, the Task Owner ID and Task Owner First and Last Name. The Task Owner ID is the Person ID of the person selected in the search dialog. The Task Owner First and Last Name is the First Name and Last Name of the person selected in the search dialog. The system stores the Task Owner First and Last Name values independently of their source person in the Spectrum Plus Person Setup Window. If these values change in the Person Setup Window, the job still displays the old values.

Status. This value indicates the state of a task. This value appears in the Task List Page and Task List Options Page. The system restricts Task Status values using a drop-down list box. See Table 6 for a list of available status values and their meanings. Changing the Task Status value could affect the task's Job Status value.

PO Number. This value holds a purchase order number for tasks that need one. Whether a task needs one is determined by the business requirements of the task.

Item ID. This value holds an Item ID value for tasks that need one. Whether a task needs one is determined by the business requirements of the task. Users can enter any Item ID value in this field. The value does not have to exist in the Spectrum Plus system (it does not have to be set up in the Item Setup Window). Users have the option to enter values in this field using the Item Search Dialog.

Quantity. This value holds a quantity information for tasks have a defined quantity. Whether a task needs one is determined by the business requirements of the task. This value must be 11.2 decimal value numeric before being saved. The value can be positive, negative, zero, or blank. The system does not perform any display formatting on this field.

Due Date. This value is the date some commitment has been made to a client or some other external party. This value appears in the Task List Page and Task List Options Page. This field must have a valid date value before being saved.

Baseline Price. This value is the price a Task Owner is expected out perform (or at least meet). The difference between the Baseline Price and the Actual Price of a task demonstrates cost savings obtained by the Task Owner. This values must be valid 13.4 decimal value before being saved. The value can be positive, negative, zero, or blank. The system formats the field with a currency symbol and right-fills decimal zeros.

Planned Start Date. This value is the date the Task Owner estimates work on a task to begin. This field must have a valid date value before being saved.

Planned End Date. This value is the date the Task Owner estimates work on a task to complete. This field must have a valid date value before being saved.

Estimate Price. This value is an estimate of the price of a task. This values must be valid 13.4 decimal value before being saved. The value can be positive, negative, zero, or blank. The system formats the field with a currency symbol and right-fills decimal zeros.

Actual Start Date. This value is the date work actually begins on a task. This field must have a valid date value before being saved.

Actual End Date. This value is the date work actually completes on a task. This field must have a valid date value before being saved.

Actual Price. This value is the actual price of a task. This values must be valid 13.4 decimal value before being saved. The value can be positive, negative, zero, or blank. The system formats the field with a currency symbol and right-fills decimal zeros. User Field 1 - 20. The system provides twenty user fields for holding extra task information. These fields can hold up to 100 characters of text. These fields are primarily meant for reporting purposes. System Administrators likely will want to customize the field titles of these fields.

Notes. This value logs the progress of a task. The Notes Section is meant to be a running commentary on the status of a task. Users add comments to this section to report on the progress of a task, especially notes describing events not captured in any other task information fields. The system allows users to exceed the character limits for these fields while the cursor remains within these fields. If users exceed the character limits for these fields and tab out (or cause the cursor to leave the field), then the system displays an Alert Message Box with the following message: The notes field can contain at most 4000 characters. The additional characters (beginning with "<first twenty character over 4000>") will not be saved. The system discarded these characters when users when users save the page. Users do not see the discarded digits until they reopen the task in this page.

Alternate Processes. Save Button - Saving Changes Before Closing. While in the Task Setup Page, users click the Save Button. The system saves any changes made to the task and leaves users in the Task Setup Page. Users continue editing the task.

Close Button - Closing without Saving. The system allows users to close the Task Setup Page without saving any changes made to the task. Users open the Task Setup Page and begin making changes. Users click the Save Button to save these changes. Users continue making changes but decide to discard these changes. Users click the Close Button. The system closes the Task Setup Page without saving the changes made since saving the task. The system does not prompt users asking if they want to save their changes. The system returns users to the Task List Page.

Save and Close Button - Saving and Closing with One Action. While in the Task Setup Page, users click the Save and Close Button. The system saves any changes made to the task, closes the Task Setup Page, and returns users to the Task List Page.

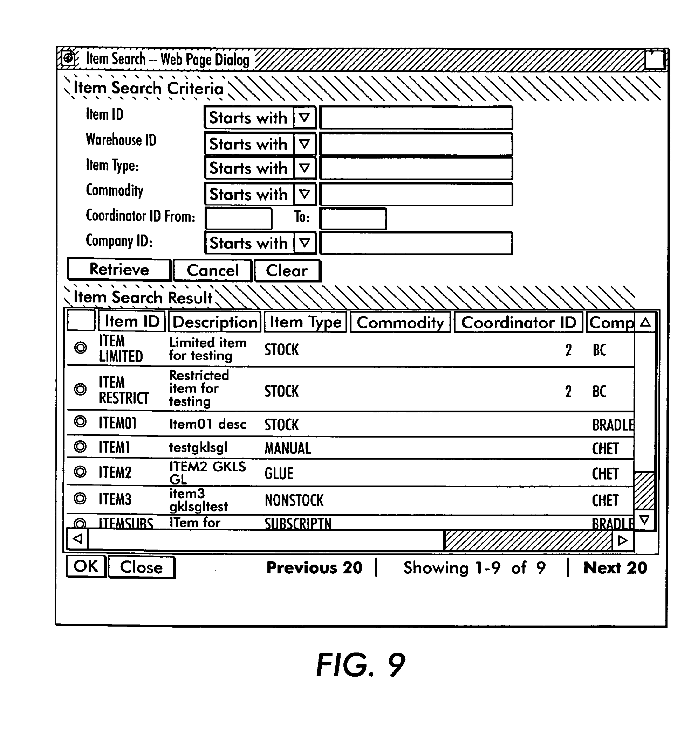

Item Search - Searching for an Item. The system allows users to search for an item in the Spectrum Plus system and reference it in a task. Users can do this at any point in any workflow (while on the Task Setup Page) described in this document. Users click the search icon along side the Item ID Field to begin searching for an item. The system opens the Item Search Dialog. The dialog box is shown in Figure 9. Users enter criteria and select an item. The system retrieves and displays the selected item in the Task Setup Page, overwriting any information that previously existed in the Item ID and Item Description Fields. Users proceed to any workflow described in this document. Note that the Item Search Dialog is the only method provided to users to populate the Item Description Field.

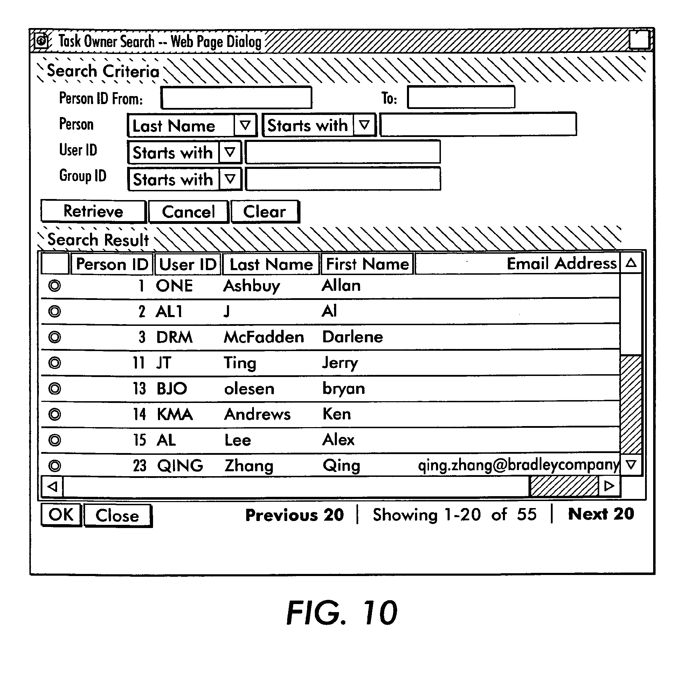

Task Owner Search - Searching for a Task Owner. The system allows users to search for a person in the Spectrum Plus system and reference that person in a task. The Task Owner Search Dialog is the only method provided to users to reference a person because the Task Owner Field is disabled. Users click the search icon along side the Task Owner Field. The system opens the Task Owner Search Dialog as shown in Figure 10. The dialog appears. Users enter criteria, retrieve a list of persons in the system, and select a person. The system populates the Task Owner ID Field with the selected person's Person ID. The system populates the Task Owner First Name and Last Name Fields with the selected person's first and last names.

Getting the Default Task ID. Even though the Task ID is not displayed in the Direct Mail module, the system still needs to generate a unique Task ID for each new task. The system determines the Task ID value from the system date and time of the web browser. The Task ID has the yyMMddhhmmss display format. For example, if the browser's date is December 3^{rd}, 2002 and its time is 4:15 PM and 32 seconds, then the Task ID is 021203161532. The default value display format is not affected by Windows OS Regional

Fields in the Task Setup Page. This table lists all fields appearing on this page. Not all field names mentioned in this document have titles displayed on the Task Setup Page. This table translates field names used in this document to the displayed field titles. The display names appear in Figure 8. Also defined in this table: Fields users can edit. Fields calculated by the system (for non-editable fields only). Edit limitations placed fields: the number of characters the system allows users to enter in a field (if applicable).

**Table 4.**

| Fields in the Task Setup Page | | | |
|---|---|---|---|
| Field Name Display Name (if different) | Editable / Calculated | Edit Limitations | Comments |
| Task Name | Yes / No | 20 char max | |
| Description | Yes / No | 254 char | |
| | | max | |
| Group | Yes / No | 254 char | |
| | | max | |
| Task Owner | Yes* / No | *Disabled - search only | First and last name display order reversible using a system-wide configuration |
| Task Status Status | Yes / No | Drop-down list | System-wide configurable display values (see ij_syscodemap) |
| PO Number | Yes / No | 254 char max | |
| Item ID | Yes / No | 20 char max | Searchable |
| Quantity | Yes / No | 9 char max | |
| Due Date | Yes / No | 40 char max | |
| Baseline Price | Yes / No | " | Saves only 13.4 decimal values; blank, zero, and negative allowed; configurable system-wide currency format |
| Planned Start Date Start Date (under Planned Band) | Yes / No | 40 char max | |
| Planned End Date End Date (under Planned Band) | Yes / No | " | |
| Estimate Price | Yes / No | " | Saves only 13.4 decimal values; blank, zero, and negative allowed; configurable system-wide currency format |
| Actual Start Date Start Date (under Actual Band) | Yes / No | 40 char max | |
| Actual End Date End Date (under Actual Band) | Yes / No | " | |
| Actual Price | Yes / No | " | Saves only 13.4 decimal values; blank, zero, and negative allowed; configurable system-wide currency format |
| User Field 1 - 20 | Yes / No | 100 char max | |
| Notes | Yes / No | None | Saves only the first 4000 characters |

Default Values for a New Task. This table defines the default values appearing the in the Task Setup Page when users create a new task. All other fields not mentioned hear appear blank (including prices, the quantity, and dates).

**Table 5.**

| Default Values for a New Task | | |
|---|---|---|
| Field Name | Default Value | Comment |
| Task Manager ID | Current user Person ID | |
| Task Manager Last Name | Current user Last Name | |
| Task Manager First Name | Current user First Name | |
| Planned Start Date | Today's date | Use web browser's date |
| Task Status | NEW | Configurable system-wide display value |

Available Task Status Values. Users manually set Task Status values; the system never changes these values. The Description column only suggests what a status value meant to be used for; because these values are set manfully, actual implementations could differ. Changing a Task Status value could affect the Job Status value and could also affect what tasks and jobs appear in the Job List and Task List Pages. The CANCELED status allows users to leave the task in the job for historical purposes, but makes the task excluded from parent job calculations, namely the job prices and status. Note that the system does not actually store these values directly and instead stores a numerical code with a job record. The Database Value column gives the stored numerical code.

**Table 6.**

| Available Task Status Values | | |
|---|---|---|
| Status Value | Description | Database Value |
| NEW | No work has been done on the task. | 1 |
| IN PROCESS | Some work has been done, but the task is not done yet. | 2 |
| COMPLETED | The task is done. No additional work needs to be done. | 5 |
| CANCELED | Work on the task has been discontinued. Job processing excludes task. | 6 |

This method of the invention provides an automated method to efficiently and effectively identify, schedule, execute and track all the tasks involved in a direct mail campaign for users that need to track the end-to-end direct mail process and for campaign managers to deliver the direct mail campaign on time and within budget.

The invention has been described with reference to particular embodiments for convenience only. Modifications and alterations will occur to others upon reading and understanding this specification taken together with the drawings. For instance, the method may also comprise tracking vendor pricing information; tracking cost savings; and reviewing and selecting a vendor for each task based on tracked cost savings.

The method may further comprise automatically creating a purchase order upon selection of a vendor for a task in the job.

According to a further embodiment, the method may comprise automatically creating a link to a requisition module for requisitioning print materials.

One of the tasks may include creating of a printed document and further comprising defining pricing of the printed document based on attributes and specifications of the printed document.

According to still another embodiment, vendor pricing is tracking using task attributes and quantity and using lowest cost vendors for the task.

## Claims

1. A method for managing a direct mail job for an organization, comprising:
defining a direct mail job within a web-based application;
defining a plurality of tasks associated with the direct mail job;
scheduling the tasks including defining a start time and a completion time;
executing the assigned tasks; and
tracking status of the tasks until all tasks have been completed.

2. The method of claim 1, further comprising:
assigning tasks to identified parties within the organization for execution of the tasks.

3. The method of claim 1, wherein one of tasks includes creating collaterals to be distributed to the direct mail recipients.

4. The method of claim 3, wherein creating collaterals comprises obtaining quotes from vendors; selecting a vendor and assigning a purchase order to the selected vendor.

5. The method of claim 4, further comprising:
tracking vendor pricing information.

6. The method of claim 1, wherein each job includes a job ID, a name, a due date, scheduled start and end dates, job price and a job manager.

7. The method of claim 1, further comprising managing a plurality of direct mail jobs.

8. The method of claim 7, further comprising grouping tasks within the plurality of jobs.

9. The method of claim 1, wherein each task includes a task ID, a name, a description, estimated start and end dates, actual start and end dates, baseline price, estimated price and actual price.

10. The method of claim 9, wherein each task includes an item ID for linking to another database and a purchase order tracking number for linking to a purchase order module.
